# EUROPÄISCHE PATENTSCHRIFT

(11) **EP 2 960 452 B1**
(45) Veröffentlichungstag und Bekanntmachung des Hinweises auf die Patenterteilung: **05.04.2017**
(21) Anmeldenummer: 15000204.6
(22) Anmeldetag: 23.01.2015
(51) Int. Cl.: F01N 3/031, B01D 46/00

(54) **Abgasanlage für Brennkraftmaschinen**
Waste gas system for combustion engines
Système d'échappement pour moteurs à combustion interne

(30) Priorität: 25.06.2014 DE 102014009265
(43) Veröffentlichungstag der Anmeldung: 30.12.2015
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- DE-A1- 10 000 921
- DE-A1- 10 206 805
- US-A- 5 377 716
- US-A1- 2013 111 879

## Beschreibung

Die Erfindung betrifft eine Abgasanlage für Brennkraftmaschinen nach dem Oberbegriff des Anspruchs 1 bzw. ein Fahrzeug oder Wasserfahrzeug, insbesondere Schiff, nach Anspruch 13.

Um die bei der Verbrennung von Kraftstoffen in Brennkraftmaschinen, beispielsweise Dieselmotoren, entstehenden Schadstoffe zu verringern, ist der Einsatz von Abgasreinigungs- bzw. Abgasnachbehandlungseinrichtungen in Form von Abgasreinigungselementen allgemein bekannt. Derartige Abgasreinigungselemente zur Nachbehandlung des Abgases können zum Beispiel Partikelfilter, SCR-Katalysatoren, etc. sein.

Immer strengere Abgasvorschriften machen mittlerweise auch bei in Schiffen eingesetzten Motoren eine Abgasnachbehandlung, zum Beispiel in Form von Partikelfiltern, SCR-Katalysatoren zur NOX-Reduzierung und DeSOx-Anlagen erforderlich.

Insbesondere bei relativ geringen Strömungsquerschnitten in den Abgasreinigungselementen, wie dies beispielsweise bei Schiffsmotoren der Fall ist, kann es gegebenenfalls zu einer Verstopfung dieser Abgasreinigungselemente kommen. Dies ist umso mehr der Fall, wenn die Brennkraftmaschine mit Kraftstoffen schlechter Qualität betrieben wird, was ebenfalls relativ häufig bei Schiffsmotoren der Fall ist, aber ebenso bei Brennkraftmaschinen von Fahrzeugen der Fall sein kann.

Eine derartige fortschreitende Verstopfung eines Abgasreinigungselementes führt zu einem starken Anstieg des Abgasgegendrucks und hat eine eventuelle Motorschädigung zur Folge. Aus diesem Grund werden Bypassleitungen vorgesehen, mittels denen die Abgasreinigungselemente bei Bedarf überbrückt werden können. Dadurch wird somit auch im Störungsfall ein sicherer Betrieb der Brennkraftmaschine und damit der Betrieb eines Fahrzeuges bzw. die Manövrierbarkeit eines Schiffes sichergestellt.

Um die Bypassleitung zu öffnen, werden dabei üblicherweise Absperrvorrichtungen in Form von Abgasklappen oder Abgasschiebern verwendet. Allerdings besteht hier, aufgrund der Tatsache, dass sie nur sehr selten verwendet und zusätzlich permanent dem Abgas ausgesetzt sind, die Gefahr, dass sie sich festsetzen und nicht mehr geöffnet werden können. Zudem ist meist eine Luftspülung an den Wellendurchgängen der Abgasklappe vorzusehen, um einen Abgasaustritt in die Umgebung zu vermeiden. Dies führt zu einem relativ hohen apparativen Aufwand und zu hohen Investitions- und Betriebskosten, da permanent Druckluft zur Verfügung gestellt werden muss.

Desweiteren ist es aus der DE 102 06 805 A1 bekannt, einen Rußfilter zur Reinigung von Abgasen einer Verbrennungsanlage eines Motors eines Kraftfahrzeuges mit Mitteln zur Reduzierung eines in dem Rußfilter herrschenden Abgasgegendruck zu versehen, wobei die Mittel zur Reduzierung des Abgasgegendrucks wenigstens eine Sollbruchstelle in einem Filterkörper des Filters und/oder in einer Bypassleitung des Filters aufweisen sollen. Die Sollbruchstelle in der Bypassleitung ist dabei als Berstplatte ausgebildet. Damit soll bei verstopftem Rußfilter ein Absterben bzw. eine Beschädigung der Brennkraftmaschine vermieden werden. Die in der Bypassleitung angeordnete Berstplatte kann dabei in Abhängigkeit von einem gemessenen Abgasgegendruck mechanisch zum Bersten gebracht werden, soll jedoch hauptsächlich ohne Notwendigkeit zusätzlicher Maßnahmen zum Bersten gebracht werden.

Weiter ist aus der DE 100 00 921 A1 ein Partikelfiltersystem mit einem Abgassammelrohr bekannt, in dem ein Partikelfilter angeordnet ist. In den Partikelfilter ist ein Bypasskanal integriert, der in Strömungsrichtung am Ende desselben mit einem Berstblech versehen ist und diesen abschließt.

Demgegenüber ist es Aufgabe der vorliegenden Erfindung, eine Abgasanlage für Brennkraftmaschinen zu schaffen, die die bedarfsweise Freigabe eines, einer Abgasreinigungseinrichtung zugeordneten Bypass- bzw. Abzweigkanals auf baulich einfache und kompakte Weise ermöglicht.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 wird eine Abgasanlage für Brennkraftmaschinen vorgeschlagen, die eine Abgasleitung aufweist, in der wenigstens ein Abgasreinigungselement (zum Beispiel ein Partikelfilter, ein SCR-Katalysator und/oder eine DeSOx-Anlage, etc.) angeordnet ist. Ferner weist die Abgasleitung wenigstens einen parallel zu dem wenigstens einen Abgasreinigungselement angeordneten Abzweigkanal (zum Beispiel wenigstens einen stromauf des wenigstens einen oder stromauf wenigstens eines Abgasreinigungselementes abzweigenden Abzweigkanal) auf, in dem eine bei einem definierten Berstdruck berstende Berstscheibeneinrichtung angeordnet ist. Weiter ist vorgesehen, dass das wenigstens eine Abgasreinigungselement zusammen mit der Berstscheibeneinrichtung in einem Bestandteil der Abgasleitung bildenden gemeinsamen Gehäuse angeordnet sind, wobei die Berstscheibeneinrichtung dergestalt strömungstechnisch parallel zu dem wenigstens einen Abgasreinigungselement angeordnet ist, dass diese bei einem definierten Berstdruck birst und damit die Abgasströmung durch den und/oder zu dem Abzweigkanal freigegeben ist.

Erfindungsgemäß ist der Abzweigkanal durch die diesem zugeordnete Berstscheibeneinrichtung in der Grundstellung nicht vollständig verschlossen, sondern bildet der Abzweigkanal einen parallel zu wenigstens einem Hauptströmungskanal verlaufenden und von einer Abgasteilströmung durchströmbaren Strömungskanal aus. Bei dieser Ausführungsform ist bevorzugt sowohl in dem wenigstens einen Hauptströmungskanal als auch in dem Abzweigkanal jeweils wenigstens ein Abgasreinigungselement angeordnet, wobei die hauptströmungskanalseitigen und abzweigkanalseitigen Abgasreinigungselemente in dem Abzweigkanal in Strömungsrichtung dergestalt örtlich zueinander versetzt sind, dass das wenigstens eine abzweigkanalseitige Abgasreinigungselement in Strömungsrichtung gesehen stromauf des wenigstens einen hauptströmungskanalseitigen Abgasreinigungselementes liegt. Durch diese hintereinanderliegende, versetzte Anordnung der hauptströmungskanalseitigen und der abzweigkanalseitigen Abgasreinigungselemente ist sichergestellt, dass im Bereich des Abzweigkanals ein relativ hoher Abgasgegendruck für den einströmenden Abgasstrom vorherrscht, so dass ein Großteil der Abgasströmung über den Hauptströmungskanal strömt, während allenfalls ein Teilstrom über den Abzweigkanal und das dort angeordnete wenigstens eine Abgasreinigungselement strömt. Bei einem derartigen Aufbau ist dann die wenigstens eine Berstscheibeneinrichtung in einem, zwischen den hauptströmungskanalseitigen und abzweigkanalseitigen Abgasreinigungselementen liegenden gemeinsamen Wandbereich des wenigstens einen Hauptströmungskanals und des Abzweigkanals angeordnet, wobei die wenigstens eine Berstschreibeneinrichtung bei einem definierten Berstdruck birst und die Abgasströmung von dem wenigstens einen Hauptströmungskanal in den Abzweigkanal stromab des dortigen wenigstens einen Abgasreinigungselementes freigibt. Das heißt mit anderen Worten, dass durch die versetzte Anordnung der hauptströmungskanalseitigen und abzweigkanalseitigen Abgasreinigungselemente in Verbindung mit der zwischen diesen liegenden Berstscheibeneinrichtung sichergestellt ist, dass für den Fall, dass das wenigstens eine stromauf liegende Abgasreinigungselement des Hauptströmungskanals in einem solchen Maße verstopft sein sollte, dass sich im Hauptströmungskanal ein, einen bestimmten Druckschwellwert übersteigender Berstdruck aufbaut, die Berstscheibeneinrichtung zerstört wird und dann das Überströmen des hauptströmungskanalseitigen Abgasstroms in den dann als Bypass fungierenden Abzweigkanal ermöglicht wird, und zwar stromab des abzweigkanalsseitigen wenigstens einen Abgasreinigungselementes, um das ungehinderte Durchströmen der Abgasleitung mit dem Abgasstrom sicherzustellen.

Gegebenenfalls kann in Verbindung mit diesem Aufbau im Abzweigkanal stromab der Berstscheibeneinrichtung wenigstens ein weiteres Abgasreinigungselement angeordnet sein, wodurch dann auch die weitere Reinigung des Abgasstroms sichergestellt wäre.

Insgesamt ergibt sich hierdurch eine insbesondere für beengte Einbauverhältnisse geeignete kompakte Bauform. Das Gehäuse kann hierbei integraler Bestandteil der Abgasleitung sein oder aber auch durch ein separates Bauteil gebildet sein, das in die Abgasleitung eingesetzt wird.

Besonders bevorzugt münden der Abzweigkanal und wenigstens ein das wenigstens eine Abgasreinigungselement aufweisender Hauptströmungskanal stromab des wenigstens einen Abgasreinigungselementes in einen gemeinsamen Gehäusebereich ein, und zwar insbesondere in einen zur Abführung des Abgases aus dem Gehäuse führenden gemeinsamen Gehäusebereich ein. Damit ist sichergestellt, dass sich auch bei einer Abgasströmung über den Abzweigkanal die gewünschten Strömungsverhältnisse im Gehäuse einstellen, und zwar analog zu einer Abgasströmung über den Hauptströmungskanal, in dem das wenigstens eine Abgasreinigungselement angeordnet ist.

Insgesamt ist somit eine Ausführungsform bevorzugt, bei der der Abzweigkanal und der wenigstens eine Hauptströmungskanal stromab ihrer jeweiligen Abgasreinigungselemente in einen gemeinsamen Gehäusebereich einmünden, und zwar insbesondere in einen zu einer Abführung aus dem Gehäuse führenden gemeinsamen Gehäusebereich einmünden. Dies bewirkt eine kompakte Bauweise.

Desweiteren kann der, die wenigstens eine Berstscheibeneinrichtung aufweisende Wandbereich wenigstens im Bereich der Berstscheibeneinrichtung winklig bezüglich der Strömungsrichtung ausgerichtet sein, und zwar insbesondere winklig gegen das stromauf liegende wenigstens eine Abgasreinigungselement angestellt sein. Mit einer derartigen winkligen Ausrichtung ist sichergestellt, dass eine ausreichende Berstkraft bei einem Abgasstau stromauf des wenigstens einen hauptströmungskanalseitigen Abgasreinigungselementes auf die Berstscheibeneinrichtung wirkt.

Die Berstscheibeneinrichtung selbst kann auf unterschiedlichste Art und Weise ausgebildet sein, so zum Beispiel durch eine einfache, herkömmliche Berstscheibe gebildet sein. Um das Bersten der Berstscheibeneinrichtung noch besser kontrollieren zu können und ein evtl. unerwünschtes Bersten bei einem betriebsbedingt erwünschten Anstieg des Abgasgegendrucks zuverlässig zu vermeiden, kann die Berstscheibeneinrichtung aber durch wenigstens zwei in Strömungsrichtung hintereinander angeordnete, insbesondere in einer flächigen Anlageverbindung aneinanderliegende, Berstscheiben gebildet sein.

Im Falle mehrerer Berstscheiben können diese, wie soeben erwähnt, grundsätzlich in einer flächigen Anlageverbindung aneinander anliegen. Gegebenenfalls können diese aber auch einen definiert vorgegebenen Spaltabstand voneinander aufweisen.

Eine besonders zuverlässige und funktionssichere Aktivierung der Berstscheibeneinrichtung ist dann gegeben, wenn der Berstscheibeneinrichtung eine mittels einer Steuereinrichtung in Abhängigkeit von wenigstens einem definiert vorgegebenen Parameter, insbesondere in Abhängigkeit von einem Erreichen oder Überschreiten eines definiert vorgegebenen Schwellwertes, ansteuerbare und aktivierbare Bersthilfe zugeordnet ist. Diese Bersthilfe kann durch wenigstens ein Heizelement, insbesondere wenigstens ein elektrisches Heizelement, und/oder durch wenigstens ein Sprengelement und/oder durch ein gasförmiges oder flüssiges Arbeitsmedium gebildet sein, mittels dem oder mittels denen die wenigstens eine Berstscheibe zur Freigabe der Abgasströmung durch den und/oder zu dem Abzweigkanal schwächbar und/oder zerstörbar ist.

Mit einer derartigen Bersthilfe kann somit die wenigstens eine Berstscheibe der Berstscheibeneinrichtung zum genau gewünschten Zeitpunkt auf kontrollierte Weise zerstört werden und damit zum geeigneten Zeitpunkt die Abgasströmung über bzw. zum Abzweigkanal freigegeben werden. Dies hilft wesentlich, die Betriebssicherheit der Abgasanlage im Hinblick auf die Abgasströmung durch den Abzweigkanal zu erhöhen.

Um die Bersthilfe zum geeigneten Zeitpunkt anzusteuern bzw. zu aktivieren, ist bevorzugt wenigstens ein Sensor stromauf und/oder stromab des wenigstens einen Abgasreinigungselementes im wenigstens einen Hauptströmungskanal angeordnet, mittels dem der wenigstens eine Parameter erfassbar ist, in Abhängigkeit von dem die Bersthilfe ansteuerbar und aktivierbar ist. Beispielsweise kann die Bersthilfe in Abhängig von einer mittels mehrerer Sensoren erfolgten Messung des Abgasgegendrucks über ein Abgasreinigungselement aktiviert werden, um sicherzustellen, dass die Berstscheibe genau dann zum Bersten gebracht wird, wenn dies erforderlich ist. Selbstverständlich kann die Aktivierung der Berstscheibe aber auch in Abhängigkeit von anderen Abgasparametern erfolgen, zum Beispiel in Abhängigkeit einer Abgastemperatur und/oder einer Stoffkonzentration im Abgas, um nur einige weitere Beispiele zu nennen.

Gemäß einer ersten bevorzugten konkreten Ausgestaltung ist die Besthilfe durch wenigstens ein elektrisches Heizelement gebildet, das an einer definierten Stelle der Berstscheibe, insbesondere zentral oder mittig, angeordnet ist und das den zugeordneten Berstscheibenwandbereich im aktivierten Zustand erhitzt, insbesondere thermisch zerstört. Mit einem derartigen elektrischen Heizelement wird eine besonders zuverlässige und funktionssichere Bersthilfe zur Verfügung gestellt.

Die Bersthilfe kann aber auch durch wenigstens ein Sprengelement gebildet sein, das an einer definierten Stelle der Berstscheibe, insbesondere zentral und/oder mittig, angeordnet ist, und das den zugeordneten Berstscheibenwandbereich im aktivierten Zustand durch Zünden einer Sprengladung zerstört. Auch hier wird eine sehr hohe Funktionssicherheit bei Betätigung der Bersthilfe erzielt, die eine zuverlässige Zerstörung der Berstscheibe bewirkt.

Gemäß einer weiteren Ausführungsform kann die Berstscheibe wenigstens bereichsweise doppelwandig ausgebildet sein und einen zwischen gegenüberliegenden Wandbereichen liegenden Freiraum aufweisen, wobei der Freiraum mittels einer Zuführeinrichtung dergestalt mit dem gasförmigen oder flüssigen Arbeitsmedium beschickbar ist, dass ein vom Freiraum und damit von Innen her auf die Berstscheibenwände wirkender Berstdruck aufbaubar ist. Besonders bevorzugt sind hier zwei voneinander beabstandete und/oder im Wesentlichen parallel zueinander ausgerichtete Berstscheiben vorgesehen, die zwischen sich einen, den Freiraum ausbildenden Spaltabstand aufweisen.

Gemäß einer weiteren alternativen Ausführungsform ist der Berstscheibe eine Druckluftzuführeinrichtung als Bersthilfe zugeordnet, und zwar bevorzugt dergestalt, dass eine Mündungsöffnung der Druckluftzuführeinrichtung im Wesentlichen mittig auf die Berstscheibe gerichtet ist. Mittels einer derartigen Druckluftzuführeinrichtung kann eine definiert vorgegebene Anzahl von Druckluftimpulsen und/oder -stößen, vorzugsweise intervall- oder pulsartig, gesteuert auf einen definierten Bereich der Berstscheibe aufgebracht werden. Bei dieser Ausführungsform handelt es sich bevorzugt um eine einwandige bzw. einlagige Berstscheibenausgestaltung. Anstelle Druckluft kann bei dieser Ausführungsvariante selbstverständlich auch jedwedes andere geeignete gasförmige bzw. ausdrücklich auch flüssige Medium Verwendung finden. Die Begrifflichkeit Druckluft ist hier somit ausdrücklich in einem weiten und nicht auf Druckluft als solche beschränkten Sinne zu verstehen.

Gemäß einer weiteren alternativen Ausführungsform ist im Abgastrakt der Brennkraftmaschine wenigstens eine Explosionsdruckerfassungseinrichtung, insbesondere wenigstens ein Drucksensor oder wenigstens ein Mikrofon, angeordnet, mittels der eine Explosion und damit ein plötzlicher Druckanstieg detektierbar ist. Die Explosionsdruckerfassungseinrichtung ist mit einer Steuereinrichtung gekoppelt, mittels der bei einer Explosionsdetektion eine Bersthilfe dergestalt ansteuerbar ist, dass mittels der Bersthilfe die wenigstens eine Berstscheibeneinrichtung vor dem Erreichen der Berstscheibeneinrichtung durch die Druckwelle zerstört wird. Die Zerstörung der Berstscheibenrichtung kann dabei grundsätzlich wie vorstehend beschrieben erfolgen, also zum Beispiel durch ein elektrisches Heizelement, durch eine Sprengladung, durch einen Druckluftimpuls, etc..

Besonders bevorzugt ist eine konkrete Ausgestaltung, bei der das Gehäuse und das wenigstens eine Abgasreinigungselement so ausgelegt sind, dass diese einem Druckanstieg von wenigstens 300 mbar, bevorzugt von wenigstens 400 mbar und höchst bevorzugt von wenigstens 480 mbar standhalten. Damit ist sichergestellt, dass auch bei einem durch eine Druckwelle bzw. eine Explosion im Abgastrakt bewirkten Druckanstieg keine Beschädigung des Gehäuses bzw. des wenigstens einen Abgasreinigungselementes erfolgt.

Zusätzlich oder aber auch alternativ zu einer derartigen Bersthilfe kann die wenigstens eine Berstscheibe oder im Falle mehrerer Berstscheiben wenigstens eine der Berstscheiben, insbesondere wenigstens die stromauf liegende Berstscheibe, wenigstens eine definierte Sollbruchstelle aufweisen. Mit derartigen Sollbruchstellen ist eine individuelle Anpassung und Auslegung der Berstscheibe an bzw. für den jeweiligen Einsatzfall möglich. Zudem können mit derartigen Sollbruchstellen genau diejenigen Bereiche festgelegt und definiert werden, an denen die Berstscheibe letztendlich bersten soll.

Insbesondere in Verbindung mit der Sicherstellung einer Gasdichtheit bei der Anordnung einer einzigen Berstscheibe ist es von Vorteil, wenn die wenigstens eine Sollbruchstelle durch eine, die Berstscheibenwand nicht durchdringende Kerbe gebildet ist. Bevorzugt ist in diesem Fall zudem eine Ausgestaltung, bei der eine Sollbruchstelle aufweisende Berstscheibe mehrere Kerben aufweist, die ein definiert vorgegebene Sollbruchstellenmuster ausbilden. Damit ist es möglich, die Berstscheibe in einer gewünschten Weise aufreißen bzw. aufplatzen zu lassen.

Das Sollbruchstellenmuster kann grundsätzlich auf unterschiedliche Art und Weise ausgebildet sein. Besonders bevorzugt ist jedoch ein Aufbau, bei dem mehrere voneinander beabstandete und sich von einem mittleren Berstscheibenbereich ausgehend nach radial außen zum Berstscheibenrand hin erstreckende Sollbruchstellen vorgesehen sein, die eine Sollbruchstellenlinie ausbilden. Wenigstens zwei derartiger Sollbruchstellenlinien können dann in Umfangsrichtung der Berstscheibe dergestalt voneinander beabstandet sein, dass die zwischen zwei Sollbruchstellenlinien liegenden Berstscheibenbereiche ein verlagerbares, insbesondere verschwenkbares, Berstscheibenwandsegment ausbilden. Diese Berstscheibenwandsegmente bilden dann nach dem Bersten regelmäßig Lappen aus, die sehr gut und kontrolliert verlagert bzw. verschwenkt werden können zur definierten Freigabe der Abgasströme durch den bzw. zum Abzweigkanal.

Die Bersthilfe kann desweiteren grundsätzlich auch zwischen zwei benachbarten und bevorzugt im Wesentlichen flächig aneinander anliegenden Berstscheiben aufgenommen und/oder angeordnet sein, was den Vorteil hat, dass die Bersthilfe durch die beiden Berstscheiben vom heißen und korrosiven Abgas abgetrennt und damit geschützt ist. Hierdurch können wesentlich kostengünstigere Materialien für diese Komponenten eingesetzt werden. Dies gilt sowohl für eine Sprengladung als auch ein elektrisches Heizelement als auch für die bereits beschriebene Zuführung eines Fluids, insbesondere Druckluft oder Wasser als fluides Medium, zwischen zwei benachbarte Berstscheiben.

Desweiteren wird ein Fahrzeug oder Schiff mit einer Brennkraftmaschine in einer Abgasanlage beansprucht, wie sie zuvor bereits ausführlich gewürdigt worden ist.

Die Erfindung wird nachfolgend anhand einer Zeichnung näher erläutert.

Es zeigen:
- Fig. 1: schematisch und beispielhaft einen Ausschnitt einer nichterfindungsgemäßen Abgasanlage einer Brennkraftmaschine mit einem in eine Abgasleitung eingesetzten Gehäuse, in dem sowohl die Berstscheibeneinrichtung als auch das wenigstens eine Abgasreinigungselement aufgenommen ist,
- Fig. 2a: eine zur Ausführungsform gemäß Fig. 1 alternative nichterfindungsgemäße Ausgestaltung des abgasleitungsseitig eingesetzten Gehäuses,
- Fig. 2b: eine schematische perspektivische Draufsicht auf das Gehäuse der Fig. 2a,
- Fig. 3: eine erfindungsgemäße Ausführungsvariante eines in eine Abgasleitung einsetzbaren oder eingesetzten Gehäuses,
- Fig. 4a: beispielhaft eine Ausführungsform einer Berstscheibeeinrichtung in einer Vorderansicht,
- Fig. 4b: die Berstscheibeneinrichtung der Fig. 4a in einer Seitenansicht (optional als doppelwandige Berstscheibeneinrichtung ausgebildet),
- Fig. 5: schematisch eine Berstscheibe mit einem elektrischen Heizelement als Bersthilfe,
- Fig. 6: schematisch eine Seitenansicht einer Berstscheibe mit einem Sprengelement als Bersthilfe,
- Fig. 7: schematisch eine doppelwandige Berstscheibenanordnung mit einem, mit einem gasförmigen oder flüssigen Arbeitsmedium als Bersthilfe beschickbaren Freiraum,
- Fig. 8: schematisch eine Berstscheibe mit zugeordneter Druckluftzufuhreinrichtung als Bersthilfe.

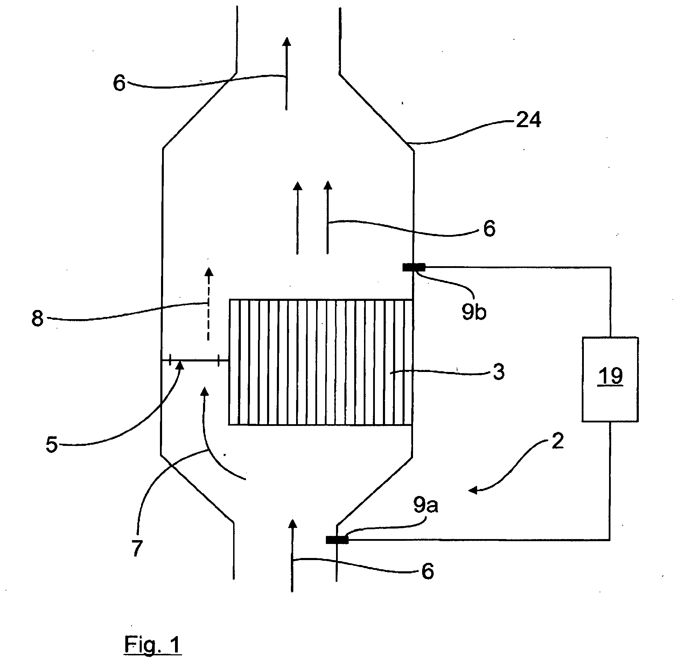

In der Fig. 1 ist beispielhaft ein Ausschnitt einer Abgasanlage 1 einer nicht näher gezeigten Brennkraftmaschine, zum Beispiel einer Dieselbrennkraftmaschine, dargestellt, die eine Abgasleitung 2 aufweist, die von der nicht gezeigten Brennkraftmaschine abgeht. In die Abgasleitung 2 hier ein Gehäuse 25 integriert, das beispielsweise durch ein separates Bauteil gebildet ist, in dem ein hier lediglich beispielhaft und schematisch dargestelltes Abgasreinigungselement 3 zusammen mit einer Berstscheibeneinrichtung 5 angeordnet bzw. integriert sind. Die einen gehäuseseitigen Abzweigkanal 4 verschließende Berstscheibeneinrichtung und das Abgasreinigungselement 3 sind hierbei strömungstechnisch parallel angeordnet, so dass bei intakter Berstscheibeneinrichtung 5 das Abgas alleine durch das Abgasreinigungselement 3 strömt. Bei einem definiert hohen Berstdruck, zum Beispiel bei einer Verstopfung des wenigstens einen Abgasreinigungselementes 3, birst dagegen die Berstscheibeneinrichtung 5, so dass zumindest ein Teilstrom 7 des in das Gehäuse 25 einströmenden Abgasstroms 6 dann auch durch den Abzweigkanal 4 strömen kann (Abgasströmung 8). Die Berstscheibeneinrichtung 5 liegt hier nur beispielhaft seitlich neben dem Abgasreinigungselement 3. Gegebenenfalls kann das Abgasreinigungselement 3 auch zentral im Gehäuse 25 gehaltert sein und umlaufend von einer entsprechend gestalteten Berstscheibeneinrichtung 5 umgeben sein.

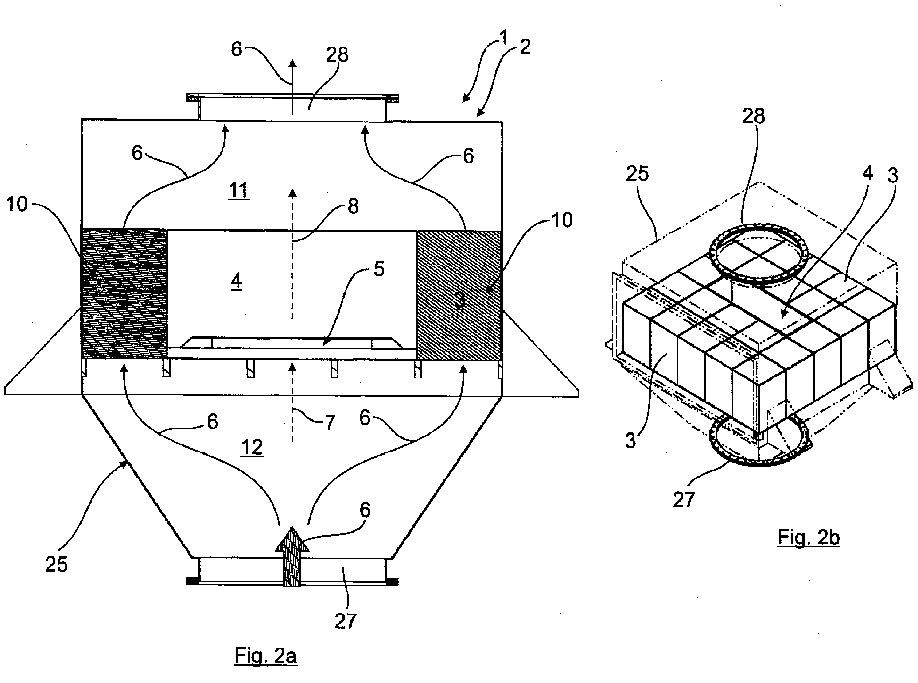

Besonders bevorzugt ist jedoch eine Ausgestaltung, wie sie in der Fig. 2a dargestellt ist, bei der der Abzweigkanal 4 mitsamt der diesen verschließenden Berstscheibeneinrichtung 5 hier beispielhaft im Wesentlichen mittig und/oder zentral im Gehäuse 25 angeordnet ist, so dass der Abzweigkanal 4 von einem Hauptströmungskanal 10 vollständig ringförmig umgeben ist.

Wie dies aus der Fig. 2a weiter ersichtlich ist, ist der Abzweigkanal 4 hier beispielhaft entlang seiner gesamten Längserstreckungsrichtung im Gehäuse 25 ringförmig von dem wenigstens einen in dem Hauptströmungskanal angeordneten Abgasreinigungselement 3 umgeben, und zwar dergestalt, dass der Abzweigkanal 4 und das diesen ringförmig umgebende wenigstens eine Abgasreinigungselement 3 bzw. mitsamt dem Hauptströmungskanal 10 in einer zwei Gehäusebereiche 11, 12 voneinander trennenden gemeinsamen Gehäuseebene liegen.

Wie dies insbesondere auch aus der Fig. 2b ersichtlich ist, kann das Gehäuse dabei jedwede beliebige Außengeometrie aufweisen, zum Beispiel, wie dargestellt, einen rechteckförmigen Querschnitt aufweisen. Es ist jedoch selbstverständlich ebenfalls möglich, dass das Gehäuse einen kreisrunden bzw. zylinderförmigen Querschnitt aufweist. Wie ebenfalls in der Fig. 2b schematisch angedeutet, können eine Vielzahl unterschiedlicher Abgasreinigungselemente 3 im Hauptströmungskanal 10, der den Abzweigkanal 4 umgibt, angeordnet sein.

Ein weiterer besonderer Vorteil des Aufbaus gemäß der Fig. 2a und 2b ist, dass der Abzweigkanal 4 und damit die diesen verschließende Berstscheibeneinrichtung 5 im Wesentlichen in einer geradlinigen Verlängerung einer Zuführung 27 des Abgases in das Gehäuse 25 bzw. einer Abführung 28 des Abgases aus dem Gehäuse 25 angeordnet ist. Dadurch ist sichergestellt, dass, zum Beispiel in Verbindung mit Gas- und Dual-Fuel-Motoren als Brennkraftmaschinen, bei einer Explosion im Abgastrakt, die dadurch entstehende Druckwelle direkt gegen die Berstscheibeneinrichtung 5 und nicht gegen die im Gehäuse angeordneten Abgasreinigungselemente 3 läuft, wodurch letztere vor Beschädigungen zuverlässig geschützt werden. Bei einem entsprechenden, an der Berstscheibeneinrichtung 5 anliegenden Berstdruck bricht dieselbe, so dass dann wieder, wie in der Ausführungsform gemäß Fig. 1, zumindest ein Teilstrom 7 über den Abzweigkanal 4 strömen kann (Abgasströmung 8).

Wie in der Fig. 2a dargestellt, verschließt die Berstscheibeneinrichtung 5 in der montierten Grundstellung einen einströmseitigen Mündungsbereich des Abzweigkanals 4, wodurch sichergestellt ist, dass es zu keinen unerwünschten Turbulenzen und Verwirbelungen im Bereich vor der Berstscheibeneinrichtung 5 kommt. Grundsätzlich könnte die Berstscheibeneinrichtung 5 aber im Abzweigkanal 4 auch weiter stromab der Mündungsöffnung desselben (in Strömungsrichtung des Abgases gesehen) liegen.

Bei einem derartigen Aufbau wird sichergestellt, dass der Abzweigkanal 4 und der das wenigstens eine Abgasreinigungselement 3 aufweisende Hauptströmungskanal 10 stromab des Abgasreinigungselementes 3 wieder in einen gemeinsamen Gehäusebereich 11 einmünden, und zwar, wie dargestellt, in einem zu einer Abführung 28 des Abgases aus dem Gehäuse 25 führenden gemeinsamen Gehäusebereich 11 einmünden.

Wie weiter dargestellt, ist der von der Zuführung 27 ausgehende Gehäusewandbereich des Gehäuses 25 anfänglich trichterförmig ausgebildet, um den Abgasstrom 6 in der gewünschten Weise in Richtung zu dem Hauptströmungskanal 10 zu lenken.

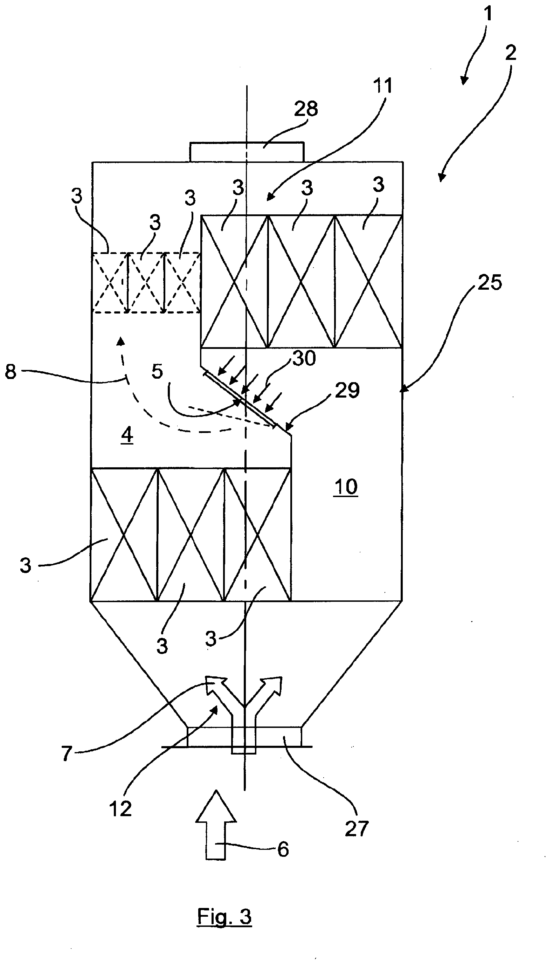

In der Fig. 3 ist nunmehr eine erfindungsgemäße Ausführungsform einer Abgasanlage 1 gezeigt, bei der der Abzweigkanal 4 einen parallel zu einem Hauptströmungskanal 10 verlaufenden und im Wesentlichen dauerhaft von einem Teilstrom 7 durchströmbaren Strömungskanal ausbildet.

Sowohl in dem Hauptströmungskanal 10 als auch in dem Abzweigkanal 4 sind jeweils ein oder mehrere Abgasreinigungselemente 3 angeordnet, wobei die hauptströmungskanalseitigen und die abzweigkanalseitigen Abgasreinigungselement in Strömungsrichtung des Abgases gesehen dergestalt örtlich zueinander versetzt sind, dass das wenigstens eine abzweigkanalseitige Abgasreinigungselement 3 in Strömungsrichtung gesehen stromauf des wenigstens einen hauptströmungskanalseitigen Abgasreinigungselementes 3 liegt.

Die Berstscheibeneinrichtung 5 ist hier in einem, zwischen den hauptströmungskanalseitigen und abzweigkanalseitigen Abgasreinigungselement 3 liegenden gemeinsamen Wandbereich 29 des Hauptströmungskanals 10 und des Abzweigkanals 4 angeordnet.

Bei einem derartigen Aufbau wird der einströmende Abgasstrom 6 unmittelbar nach der Zuführung 27 auf den Hauptströmungskanal 10 und den Abzweigkanal 4 aufgeteilt, wobei die größere Menge des Abgasstroms durch den Hauptströmungskanal 10 strömt, weil die gegenüber den hauptströmungskanalseitigen Abgasreinigungselementen 3 stromauf angeordneten abzweigkanalseitigen Abgasreinigungselemente 3 hier sofort einen relativ hohen Strömungswiderstand ausbilden, der bewirkt, dass eben die größere Menge an Abgas über den Hauptströmungskanal 10 strömt.

Für den Fall dass sich dann, zum Beispiel durch das Zusetzen der hauptströmungskanalseitigen Abgasreinigungselemente 3 ein entsprechend Abgasgegendruck im Bereich stromauf des oder der hauptströmungskanalseitigen Abgasreinigungselemente(s) 3 ausbilden sollte, zum Beispiel durch Verstopfung des Abgasreinigungselementes 3 im Hauptströmungskanal 10, wirkt auf den winklig bezüglich des wenigstens einen hauptströmungskanalseitigen Abgasreinigungselementes 3 angestellten Wandbereich 29 bzw. die dort angeordnete Berstscheibeneinrichtung 5 ein hier durch die Pfeile 30 dargestellter Berstdruck. Übersteigt dieser Berstdruck einen definiert vorgegebenen Schwellwert, birst die Berstscheibeneinrichtung 5 und die Abgasströmung 8 vom Hauptströmungskanal 10 zum Abzweigkanal 4 ist freigegeben. Wie dies aus der Fig. 3 sehr gut ersichtlich ist, werden dadurch sowohl die hauptströmungskanalseitig angeordneten Abgasreinigungselemente 3 als auch die stromauf dazu liegenden abzweigkanalseitigen Abgasreinigungselemente 3 entsprechend bygepasst, so dass die Abgasströmung durch das Gehäuse 25 ungehindert erfolgen kann. Um dennoch eine gewisse Abgasreinigung sicherzustellen, kann, wie dies in der Fig. 3 schematisch und strichliert eingezeichnet ist, stromab der Berstscheibeneinrichtung 5 im Abzweigkanal ggf. wenigstens ein weiteres Abgasreinigungselement 3 optional angeordnet sein.

Auch bei dieser Ausführungsform münden der Abzweigkanal 4 und der Hauptströmungskanal 10 somit stromab ihrer jeweiligen Abgasreinigungselemente 3 wieder in einen gemeinsamen Gehäusebereich 11 ein, der zu einer Abführung 28 des Abgases aus dem Gehäuse 25 führt.

Die Berstscheibeneinrichtung 5 kann grundsätzlich auf unterschiedliche Art und Weise ausgebildet werden, so zum Beispiel durch eine herkömmliche Berstscheibe bzw. Berstplatte, wie sie zum Beispiel in der DE 102 06 805 A1 beschrieben ist.

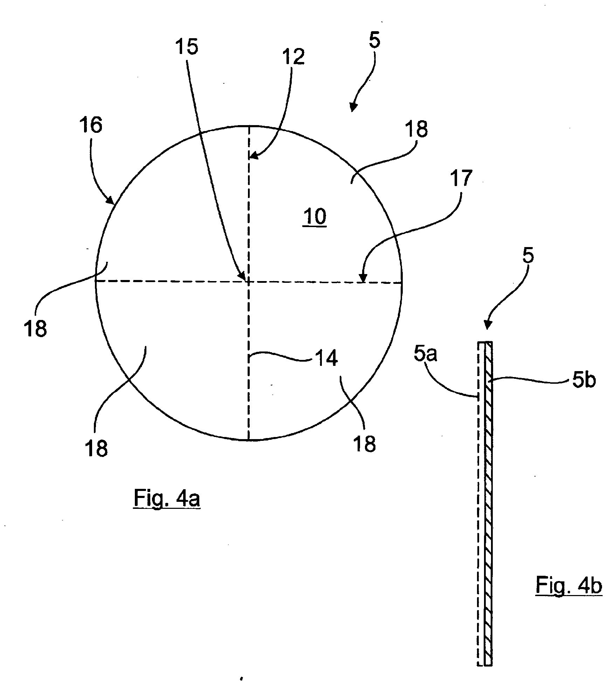

Eine besonders bevorzugte Ausführungsform der Berstscheibeneinrichtung 5 wird nachfolgend in Verbindung mit den Fig. 4 bis 8 näher beschrieben:

Gemäß einer besonders einfachen und bevorzugten Ausführung kann die Berstscheibeneinrichtung 5, wie in den Fig. 4a und 4b dargestellt, durch eine einzige Berstplatte bzw. Berstscheibe gebildet sein, die hier lediglich beispielhaft eine kreisrunde Außengeometrie aufweist, genauso gut aber, wie dies zum Beispiel in Verbindung mit der Fig. 2a und 2b der Fall wäre, jedwede andere geeignete Geometrie aufweisen kann, zum Beispiel eine rechteckförmige Außengeometrie. Die durch eine einzige Berstscheibe gebildete Berstscheibeneinrichtung weist hier Sollbruchstellen 14 auf, und zwar in Form von die Berstscheibenwand nicht durchdringenden Kerben. Diese Sollbruchstellen 14 bilden ein definiertes Sollbruchstellenmuster 17 aus, gemäß dem jeweils mehrere voneinander beabstandet und sich von einem mittleren Berstscheibenbereich 15 ausgehend nach radial außen zum Berstscheibenrand 16 hin erstreckende Sollbruchstellen 14 vorgesehen sind, die jeweils eine Sollbruchstellenlinie ausbilden. Mehrere dieser Sollbruchstellenlinien sind in Umfangsrichtung der Berstscheibe jeweils, zum Beispiel gleichmäßig, voneinander beabstandet, so dass die jeweils zwischen zwei Sollbruchstellenlinien liegenden Berstscheibenbereiche ein verlagerbares bzw. verschwenkbares Berstscheibenwandsegment 18 ausbilden.

Wie dies weiter aus der Fig. 4b ersichtlich ist, kann die Berstscheibeneinrichtung 5 aber auch durch zwei, vorzugsweise in einer flächigen Anlageverbindung aneinanderliegende Berstscheiben 5a, 5b ausgebildet sein, die gegebenenfalls unterschiedlich dimensioniert bzw. unterschiedlich ausgebildet sind.

Grundsätzlich wäre es ausreichend, lediglich Berstscheibeneinrichtungen 5 mit einer derartigen Sollbruchstellenkontur für ein definiertes Aufplatzen der Berstscheibeneinrichtung 5 einzusetzen. Für eine besonders kontrollierte Zerstörung der Berstscheibeneinrichtung 5 ist jedoch eine Ausführungsform vorteilhaft, bei der die Berstscheibeneinrichtung 5 mittels einer Bersthilfe kontrolliert und definiert zum Bersten gebracht wird.

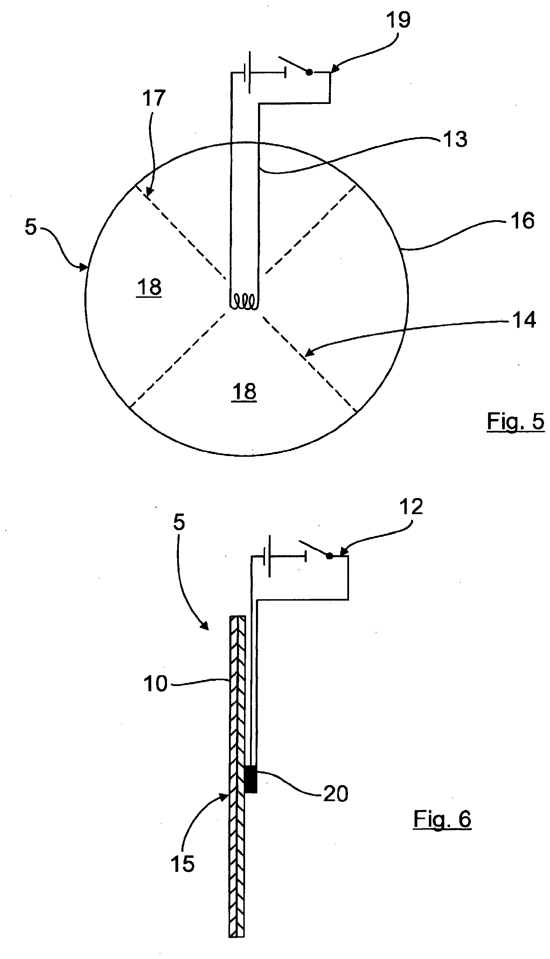

Hierzu kann in der Abgasanlage 1, wie dies lediglich beispielhaft in Verbindung mit der Ausführungsform gemäß Fig. 1 dargestellt ist (für die Ausführungsformen der Fig. 2 und 3 gilt dasselbe analog), mittels Sensoren 9a, 9b, die hier lediglich beispielhaft stromauf und stromab des (wenigstens einen) hauptströmungskanalseitigen Abgasreinigungselementes 3 angeordnet sind, der Druck stromauf bzw. stromab dieses Abgasreinigungselementes 3 mittels einer Steuereinrichtung 19 erfasst und zum Beispiel ein Abgasgegendruck stromauf des hauptströmungskanalseitig angeordneten Abgasreinigungselementes 3 ermittelt werden. Überschreitet dieser Druckwert einen definiert vorgegebenen Schwellwert, aktiviert die Steuereinrichtung 19 eine Bersthilfe, die zum Beispiel, wie in der Fig. 5 dargestellt, durch ein elektrisches Heizelement 13 gebildet sein kann. Dieses elektrische Heizelement 13 ist hier beispielhaft zentral bzw. mittig an der hier durch eine einzige Berstscheibe gebildeten Berstscheibeneinrichtung 5 angeordnet und bewirkt, dass der zugeordnete Berstscheibenwandbereich im aktivierten Zustand des elektrischen Heizelementes 13 erhitzt und dadurch insbesondere thermisch geschädigt bzw. zerstört wird.

Auch hier kann die Berstscheibe der Berstscheibeneinrichtung 5 wiederum die zuvor beschriebenen Sollbruchstellen aufweisen, so dass nach einer anfänglichen Schädigung bzw. Zerstörung des mittleren Berstscheibenbereichs 15 durch das elektrische Heizelement 13 durch den dann weiter anliegenden relativ hohen Abgasgegendruck eine gezielte Verlagerung der lappenartigen Berstscheibenwandsegmente 18 und damit eine kontrollierte Freigabe der Abzweigleitung 4 für den Abgasstrom erfolgen kann.

Das elektrische Heizelement 13 ist hier mit der lediglich beispielhaft dargestellten Steuereinrichtung 19 gekoppelt, die das elektrische Heizelement 13 dann ansteuert, wenn, ganz allgemein gesprochen, mittels wenigstens eines Sensors festgestellt worden ist, dass die Abgasströmung 8 über die Abzweigleitung 4 freizugeben ist. Mittels der Sensoren 9a, 9b kann, wie zuvor dargestellt, zum Beispiel der Differenzdruck gemessen werden. Alternativ oder zusätzlich können aber selbstverständlich auch Temperatur- und/oder NOx-Sensoren verwendet bzw. deren Messergebnisse herangezogen werden, um die Aktivierung des elektrischen Heizelementes 13 als Bersthilfe zu steuern.

Anstelle der Anordnung von zwei Sensoren 9a, 9b kann somit grundsätzlich auch nur ein Sensor stromauf oder stromab des Abgasreinigungselementes 3 vorgesehen sein.

Das zuvor zur Fig. 2 Ausgeführte gilt in analoger Weise für die eine Seitenansicht einer durch eine einzige Berstscheibe gebildeten Berstscheibenrichtung 5 zeigende Ausführungsform der Fig. 6, bei der dem zentralen bzw. mittigen Berstscheibenbereich 15 ein Sprengelement 20 mit einer Sprengladung zugeordnet ist, die den zugeordneten Berstscheibenwandbereich im aktivierten Zustand durch Zünden der Sprengladung zerstört.

Auch wenn bei den Ausführungsformen der Fig. 5 und 6 die Bersthilfe lediglich auf einer Seite der Berstscheibe beispielhaft und schematisch gezeigt ist, kann diese selbstverständlich auch auf der anderen Seite angeordnet werden. Auch eine beiderseitige Anordnung ist ebenso möglich, genauso wie eine Anordnung der Bersthilfen an unterschiedlichen Stellen der Berstscheibe.

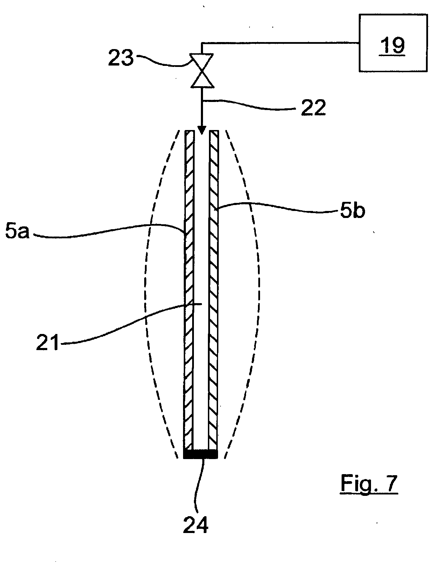

In der aus Übersichtlichkeitsgründen stark übertrieben gezeichneten Darstellung der Fig. 7 ist eine Ausführungsform gezeigt, bei der zwei voneinander beabstandete bzw. im Wesentlichen parallel zueinander ausgerichtete Berstscheiben 5a, 5b eine Berstscheibeneinrichtung 5 ausbilden, die zwischen sich einen, einen Freiraum 21 ausbildenden Spaltabstand aufweisen. Der Freiraum 21 ist mittels einer Zuführeinrichtung 22 dergestalt mit einem gasförmigen (zum Beispiel Druckluft) oder flüssigen (zum Beispiel Wasser) Arbeitsmedium als Bersthilfe beschickbar, dass ein vom Freiraum 21 und damit von Innen her auf die Berstscheibenwände wirkender Berstdruck aufgebaut werden kann, wie dies in der Fig. 7 strichliert dargestellt ist. Ab einem definierten Berstdruck birst dann die Berstscheibenanordnung aus den zwei Berstscheiben 5a, 5b, so dass dann die Abzweigleitung 4 zum Beispiel für die Abgasströmung 8 freigegeben ist. Auch hier ist die Zuführeinrichtung 22 wiederum durch die Steuereinrichtung 19 entsprechend angesteuert.

Es versteht sich, dass die Zuführeinrichtung 22 mittels eines Absperrelementes 23 absperrbar ist. Das heißt, dass mittels der Steuereinrichtung letztendlich das Absperrelement 23 angesteuert wird, um die Zuführung des Arbeitsmediums, zum Beispiel Druckluft, in den Freiraum 21 hinein zu ermöglichen.

Es versteht sich weiter, dass die doppelwandige Berstscheibeanordnung 5 hier so ausgeführt sein soll, dass das zugeführte Arbeitsmedium die Berstscheiben 5a, 5b in der gezeigten Art und Weise aufblähen kann. Das heißt, dass der Anschluss der Zuführeinrichtung 22 entsprechend dicht auszuführen ist und dass die Berstscheiben 5 zum Beispiel randseitig dicht miteinander verbunden sein müssen, wie dies lediglich beispielhaft mittels der Verbindung 24 in der Fig. 7 schematisch dargestellt ist.

Desweiteren kann selbstverständlich auch sowohl bei der Ausführungsform gemäß der Fig. 6 als auch bei der Ausführungsform der Fig. 7 an den jeweiligen Berstscheiben 5a und 5b jeweils ein definiert vorgegebenen Sollbruchstellenmuster ausgebildet sein.

In Verbindung mit der doppelwandigen Berstscheibenanordnung der Fig. 7 kann selbstverständlich auch vorgesehen sein, zwischen den Berstscheiben 5a, 5b, zum Beispiel im Wesentlichen mittig und zentral, andere Bersthilfen aufzunehmen bzw. anzuordnen, zum Beispiel das elektrische Heizelement 13 oder das Sprengelement 20.

Dieser Aufbau mit einer doppelwandigen Berstscheibenanordnung hat insbesondere den Vorteil, dass die Zuführleitungen bzw. Ventile bzw. alle weiter benötigten Bauteile der jeweiligen Bersthilfe nicht mit dem Abgas in Kontakt gelangen können.

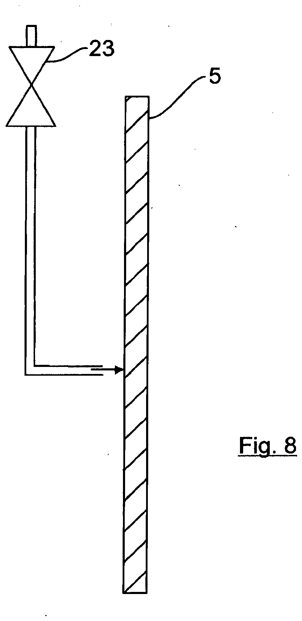

In der Fig. 8 ist schließlich eine weitere alternative Ausführungsform gezeigt, bei der der durch eine einzige Berstscheibe gebildeten Berstscheibeneinrichtung 5 eine Druckluftzuführeinrichtung 26 als Bersthilfe zugeordnet ist, und zwar bevorzugt so, dass eine Mündungsöffnung der Druckluftzuführeinrichtung 26 im Wesentlichen mittig auf die Berstscheibe gerichtet ist. Mittels der Druckluftzufuhreinrichtung 26 kann dann entsprechend gesteuert (und in analoger Weise zu den vorherigen Ausführungsformen) von der hier nicht gezeigten Steuereinrichtung 19 ein oder mehrere Druckluftimpulse und/oder -stöße, vorzugsweise Intervall- oder pulsartig auf die Berstscheibe aufgebracht und diese somit zerstört werden. Es versteht sich, dass die Druckluftzuführeinrichtung 26 mittels eines Absperrelements 23 absperrbar ist. Das heißt, dass mittels der Steuereinrichtung 19 letztendlich das Absperrelement 23 angesteuert wird, um die Zuführung der Druckluft bzw. jedes anderen geeigneten gasförmigen oder flüssigen Mediums zu ermöglichen.

**Bezugszeichenliste**

| | | | |
|---|---|---|---|
| 1 | Abgasanlage | 25 | Gehäuse |
| 2 | Abgasleitung | 26 | Druckluftzuführeinrichtung |
| 3 | Abgasreinigungselement | 27 | Zuführung |
| 4 | Abzweigkanal | 28 | Abführung |
| 5 | Berstscheibeneinrichtung | 29 | Wandbereich |
| 5a, 5b | Berstscheiben | 30 | Berstdruck |
| 6 | Abgasstrom | | |
| 7 | Teilstrom | | |
| 8 | Abgasströmung | | |
| 9a, 9b | Sensoren | | |
| 10 | Hauptströmungskanal | | |
| 11 | Gehäusebereich | | |
| 12 | Gehäusebereich | | |
| 13 | elektrisches Heizelement | | |
| 14 | Sollbruchstellen | | |
| 15 | mittlerer Berstscheibenbereich | | |
| 16 | Berstscheibenrand | | |
| 17 | Sollbruchstellenmuster | | |
| 18 | Berstscheibenwandsegment | | |
| 19 | Steuereinrichtung | | |
| 20 | Sprengelement | | |
| 21 | Freiraum | | |
| 22 | Zuführeinrichtung | | |
| 23 | Absperrelement | | |
| 24 | Verbindung | | |

## Patentansprüche

1. Abgasanlage für Brennkraftmaschinen, mit einer Abgasleitung (2), in der wenigstens ein Abgasreinigungselement (3) angeordnet ist, und mit wenigstens einem parallel zu dem wenigstens einen Abgasreinigungselement (3) angeordneten Abzweigkanal (4), in dem eine bei einem definierten Berstdruck berstende Berstscheibeneinrichtung (5) angeordnet ist, wobei das wenigstens eine Abgasreinigungselement (3) zusammen mit der Berstscheibeneinrichtung (5) in einem Bestandteil der Abgasleitung (2) bildenden gemeinsamen Gehäuse (25) angeordnet sind, und wobei die Berstscheibeneinrichtung (5) dergestalt strömungstechnisch parallel zu dem wenigstens einen Abgasreinigungselement (3) angeordnet ist, dass diese bei einem definierten Berstdruck birst und damit die Abgasströmung durch den und/oder zu dem Abzweigkanal (4) freigibt, **dadurch gekennzeichnet,**
**dass** der Abzweigkanal (4) einen parallel zu wenigstens einem Hauptströmungskanal (10) verlaufenden und von einer Abgasteilströmung durchströmbaren Strömungskanal ausbildet,
**dass** sowohl in dem wenigstens einen Hauptströmungskanal (10) als auch in dem Abzweigkanal (4) jeweils wenigstens ein Abgasreinigungselement (3) angeordnet ist, wobei die hauptströmungskanalseitigen und abzweigkanalseitigen Abgasreinigungselemente (3) in Strömungsrichtung dergestalt örtlich zueinander versetzt sind, dass das wenigstens eine abzweigkanalseitige Abgasreinigungselement (3) in Strömungsrichtung gesehen stromauf des wenigstens einen hauptströmungskanalseitigen Abgasreinigungselementes (3) liegt,
**dass** die wenigstens eine Berstscheibeneinrichtung (5) in einem, zwischen den hauptströmungskanalseitigen und abzweigkanalseitigen Abgasreinigungselementen (3) liegenden gemeinsamen Wandbereich (29) des wenigstens eines Hauptströmungskanals (10) und des Abzweigkanals (4) angeordnet ist, wobei die wenigstens eine Berstscheibeneinrichtung (5) bei einem definierten Berstdruck birst und die Abgasströmung von dem wenigstens einen Hauptströmungskanal in den Abzweigkanal (4) stromab des dortigen wenigstens einen Abgasreinigungselementes (3) freigibt.

2. Abgasanlage nach Anspruch 1, **dadurch gekennzeichnet, dass** im Abzweigkanal (4) stromab der Berstscheibeneinrichtung (5) wenigstens ein weiteres Abgasreinigungselement (3) angeordnet ist.

3. Abgasanlage nach Anspruch 1 oder 2, **dadurch gekennzeichnet, dass** der Abzweigkanal (4) und wenigstens ein das wenigstens eine Abgasreinigungselement (3) aufweisender Hauptströmungskanal (10) stromab des wenigstens einen Abgasreinigungselementes (3) in einen gemeinsamen Gehäusebereich einmünden, insbesondere in einen zu einer Abführung (28) des Abgases aus dem Gehäuse (25) führenden gemeinsamen Gehäusebereich (11) einmünden.

4. Abgasanlage nach einem der vorhergehenden Ansprüche, **dadurch gekennzeichnet, dass** der die wenigstens eine Berstscheibeneinrichtung (5) aufweisende Wandbereich wenigstens im Bereich der Berstscheibeneinrichtung (5) winklig bezüglich der Strömungsrichtung ausgerichtet ist, insbesondere winklig gegen das stromauf liegende wenigstens eine Abgasreinigungselement (3) angestellt sein.

5. Abgasanlage nach einem der vorhergehenden Ansprüche, **dadurch gekennzeichnet, dass** die Berstscheibeneinrichtung (5) durch wenigstens eine Berstscheibe gebildet ist, insbesondere die Berstscheibeneinrichtung (5) durch wenigstens zwei in Strömungsrichtung (9) hintereinander angeordnete, insbesondere in einer flächigen Anlageverbindung anliegende, Berstscheiben gebildet ist.

6. Abgasanlage nach einem der vorhergehenden Ansprüche, **dadurch gekennzeichnet, dass** der Berstscheibeneinrichtung (5) eine mittels einer Steuereinrichtung (12) in Abhängigkeit von wenigstens einem definiert vorgegebenen Parameter, insbesondere in Abhängigkeit von einem Erreichen oder Überschreiten eines definiert vorgegebenen Schwellwertes, ansteuerbare und aktivierbare Bersthilfe zugeordnet ist, wobei bevorzugt vorgesehen ist, dass die Bersthilfe durch wenigstens ein Heizelement (13) und/oder durch wenigstens ein Sprengelement (20) und/oder durch ein gasförmiges oder flüssiges Arbeitsmedium gebildet ist, mittels dem oder mittels denen die wenigstens eine Berstscheibe der Berstscheibeneinrichtung (5) zur Freigabe der Abgasströmung durch den und/oder zu dem Abzweigkanal (4) schwächbar und/oder zerstörbar ist.

7. Abgasanlage nach Anspruch 6, **dadurch gekennzeichnet, dass** wenigstens ein Sensor (10, 11) stromauf und/oder stromab des wenigstens einen Abgasreinigungselementes (3) angeordnet ist, mittels dem der wenigstens eine Parameter erfassbar ist, in Abhängigkeit von dem die Bersthilfe ansteuerbar und aktivierbar ist.

8. Abgasanlage nach Anspruch 6 oder 7, **dadurch gekennzeichnet, dass** die Bersthilfe durch wenigstens ein elektrisches Heizelement (13) gebildet ist, das an einer definierten Stelle der Berstscheibe, (5) insbesondere zentral und/oder mittig, angeordnet ist und das den zugeordneten Berstscheibenwandbereich im aktivierten Zustand erhitzt, insbesondere thermisch zerstört.

9. Abgasanlage nach einem der Ansprüche 6 bis 8, **dadurch gekennzeichnet, dass** die Bersthilfe durch wenigstens ein Sprengelement (20) gebildet ist, das an einer definierten Stelle der Berstscheibe (5), insbesondere zentral und/oder mittig, angeordnet ist und das den zugeordneten Berstscheibenwandbereich im aktivierten Zustand durch Zünden einer Sprengladung zerstört.

10. Abgasanlage nach einem der Ansprüche 6 bis 9, **dadurch gekennzeichnet, dass** die Berstscheibe (5) wenigstens bereichsweise doppelwandig ausgebildet ist und einen zwischen gegenüberliegenden Wandbereichen liegenden Freiraum (21) aufweist, wobei der Freiraum (21) mittels einer Zuführeinrichtung (22) dergestalt mit dem gasförmigen oder flüssigen Arbeitsmedium beschickbar ist, das ein vom Freiraum (21) und damit von innen her auf die Berstscheibenwände wirkender Berstdruck aufbaubar ist.

11. Abgasanlage nach einem der Ansprüche 6 bis 10, **dadurch gekennzeichnet, dass** der Berstscheibe (5) eine Druckluftzuführeinrichtung (26) als Bersthilfe zugeordnet ist, insbesondere eine Mündungsöffnung der Druckluftzuführeinrichtung (26) im Wesentlichen mittig auf die Berstscheibe (5) gerichtet ist, mittels der ein Druckluftimpuls und/oder -stoß, vorzugsweise intervall- oder pulsartig, gesteuert auf einen definierten Bereich der Berstscheibe (5) aufbringbar ist.

12. Abgasanlage nach einem der Ansprüche 6 bis 11, **dadurch gekennzeichnet,**
**dass** im Abgastrakt der Brennnkraftmaschine wenigstens eine Explosionsdruckerfassungseinrichtung, insbesondere wenigstens ein Drucksensor oder wenigstens ein Mikrofon, angeordnet ist, mittels der eine Explosion detektierbar ist,
**dass** die Explosionsdruckerfassungseinrichtung mit einer Steuereinrichtung gekoppelt ist, mittels der bei einer Explosionsdetektion eine Bersthilfe dergestalt ansteuerbar ist, dass mittels der Bersthilfe die wenigstens eine Berstscheibeneinrichtung (5) vor dem Erreichen der Berstscheibeneinrichtung (5) durch die Druckwelle zerstörbar ist.

13. Fahrzeug, insbesondere Nutzfahrzeug, oder Wasserfahrzeug, insbesondere Schiff, mit einer Brennkraftmaschine mit einer Abgasanlage (1) nach einem der vorhergehenden Ansprüche.

## Claims

1. Exhaust system for internal combustion engines, having an exhaust gas line (2) in which at least one exhaust gas purification element (3) is arranged, and having at least one branch duct (4) which is arranged parallel to the at least one exhaust gas purification element (3) and in which a bursting disc device (5) which bursts at a defined bursting pressure is arranged, wherein the at least one exhaust gas purification element (3) is arranged, together with the bursting disc device (5), in a common housing (25) forming part of the exhaust gas line (2), and wherein the bursting disc device (5) is arranged fluidically parallel to the at least one exhaust gas purification element (3) in such a way that said bursting disc device (5) bursts at a defined bursting pressure and therefore releases the exhaust gas flow through the and/or to the branch duct (4), **characterized**
**in that** the branch duct (4) forms a flow duct which runs parallel to at least one main flow duct (10) and through which a partial flow of exhaust gas can flow,
**in that** at least one exhaust gas purification element (3) is arranged respectively both in the at least one main flow duct (10) and in the branch duct (4), wherein the exhaust gas purification elements (3) on the main flow duct side and on the branch duct side are positionally offset with respect to one another in the direction of flow in such a way that the at least one exhaust gas purification element (3) on the branch duct side lies, when viewed in the direction of flow, upstream of the at least one main flow duct side exhaust gas purification element (3),
**in that** the at least one bursting disc device (5) is arranged in a common wall region (29), lying between the main flow duct side and branch duct side exhaust gas purification elements (3), of the at least one main flow duct (10) and of the branch duct (4), wherein the at least one bursting disc device (5) bursts at a defined bursting pressure and releases the exhaust gas flow from the at least one main flow duct into the branch duct (4) downstream of the at least one exhaust gas purification element (3) there.

2. Exhaust system according to Claim 1, **characterized in that** at least one further exhaust gas purification element (3) is arranged downstream of the bursting disc device (5) in the branch duct (4).

3. Exhaust system according to Claim 1 or 2, **characterized in that** the branch duct (4) and at least one main flow duct (10) having the at least one exhaust gas purification element (3) open, downstream of the at least one exhaust gas purification element (3), into a common housing region, in particular into a common housing region (11) which leads to a discharge line (28) of the exhaust gas from the housing (25).

4. Exhaust system according to one of the preceding claims, **characterized in that** the wall region having the at least one bursting disc device (5) is oriented, at least in the region of the bursting disc device (5), at an angle with respect to the direction of flow, in particular is positioned at an angle with respect to the at least one upstream exhaust gas purification element (3).

5. Exhaust system according to one of the preceding claims, **characterized in that** the bursting disc device (5) is formed by at least one bursting disc, in particular the bursting disc device (5) is formed by at least two bursting discs which are arranged one behind the other in the direction of flow (9) and bear, in particular, in a planar abutting connection.

6. Exhaust system according to one of the preceding claims, **characterized in that** a bursting aid which can be actuated and activated by means of a control device (12) as a function of at least one parameter which is prescribed in a defined fashion, in particular as a function of a threshold value which is prescribed in a defined fashion being reached or exceeded is assigned to the bursting disc device (5), wherein there is preferably provision that the bursting aid is formed by at least one heating element (13) and/or by at least one explosive element (20) and/or by a gaseous or liquid working medium by means of which the at least one bursting disc of the bursting disc device (5) can be weakened and/or destroyed in order to release the flow of exhaust gas through and/or to the branch duct (4).

7. Exhaust system according to Claim 6, **characterized in that** at least one sensor (10, 11) is arranged upstream and/or downstream of the at least one exhaust gas purification element (3), by means of which sensor (10, 11) the at least one parameter can be detected, as a function of which the bursting aid can be actuated and activated.

8. Exhaust system according to Claim 6 or 7, **characterized in that** the bursting aid is formed by at least one electrical heating element (13) which is arranged at a defined location on the bursting disc (5), in particular centrally and/or in the middle, and which, in the activated state, heats the assigned bursting disc wall region, in particular destroys it thermally.

9. Exhaust system according to one of Claims 6 to 8, **characterized in that** the bursting aid is formed by at least one explosive element (20) which is arranged at a defined location on the bursting disc (5), in particular centrally and/or in the middle, and which, in the activated state, destroys the assigned bursting disc wall region by firing an explosive charge.

10. Exhaust system according to one of Claims 6 to 9, **characterized in that** the bursting disc (5) is constructed, at least in certain regions, with a double wall and has a free space (21) which lies between wall regions which lie opposite one another, wherein the free space (21) can be fed, by means of a feed device (22), with the gaseous or liquid working medium in such a way that a bursting pressure which acts from the free space (21), and therefore from inside, on the bursting disc walls can be built up.

11. Exhaust system according to one of Claims 6 to 10, **characterized in that** a compressed air feed device (26) is assigned as a bursting aid to the bursting disc (5), in particular a mouth opening of the compressed air feed device (26) is directed essentially centrally onto the bursting disc (5) and can be used to apply a compressed air pulse and/or blast in a controlled fashion onto a defined region of the bursting disc (5), preferably at intervals or in a pulse-like fashion.

12. Exhaust system according to one of Claims 6 to 11, **characterized**
**in that** arranged in the exhaust section of the internal combustion engine is at least one explosion pressure-detection device, in particular at least one pressure sensor or at least one microphone, by means of which an explosion can be detected,
**in that** the explosion pressure-detection device is coupled to a control device by means of which, when an explosion is detected, a bursting aid can be actuated in such a way that by means of the bursting aid the at least one bursting disc device (5) can be destroyed before the bursting disc device (5) is reached by the pressure wave.

13. Vehicle, in particular utility vehicle or water craft, in particular ship, having an internal combustion engine with an exhaust system (1) according to one of the preceding claims.

## Revendications

1. Système d'échappement pour moteurs à combustion interne, comprenant une conduite de gaz d'échappement (2) dans laquelle est disposé au moins un élément de purification des gaz d'échappement (3), et comprenant au moins un canal de dérivation (4) disposé parallèlement à l'au moins un élément de purification des gaz d'échappement (3), dans lequel est disposé un dispositif à disque de rupture (5) se rompant à une pression de rupture définie, l'au moins un élément de purification des gaz d'échappement (3), conjointement avec le dispositif à disque de rupture (5), étant disposé dans un boîtier commun (25) faisant partie de la conduite de gaz d'échappement (2), et le dispositif à disque de rupture (5) étant disposé par une technique fluidique parallèlement à l'au moins un élément de purification des gaz d'échappement (3) de telle sorte que celui-ci se rompe à une pression de rupture définie et libère ainsi l'écoulement de gaz d'échappement à travers et/ou vers le canal de dérivation (4),
**caractérisé en ce que**
le canal de dérivation (4) constitue un canal d'écoulement s'étendant parallèlement à au moins un canal d'écoulement principal (10) et pouvant être parcouru par un écoulement partiel de gaz d'échappement,
**en ce qu'**à la fois dans l'au moins un canal d'écoulement principal (10) et dans le canal de dérivation (4) est à chaque fois disposé au moins un élément de purification des gaz d'échappement (3), les éléments de purification des gaz d'échappement (3) du côté du canal d'écoulement principal et du côté du canal de dérivation étant décalés localement l'un par rapport à l'autre dans la direction d'écoulement de telle sorte que l'au moins un élément de purification des gaz d'échappement (3) du côté du canal de dérivation, vu dans la direction d'écoulement, soit situé en amont de l'au moins un élément de purification des gaz d'échappement (3) du côté du canal d'écoulement principal,
**en ce que** l'au moins un dispositif à disque de rupture (5) est disposé dans une région de paroi commune (29) de l'au moins un canal d'écoulement principal (10) et du canal de dérivation (4) située entre les éléments de purification des gaz d'échappement (3) du côté du canal d'écoulement principal et du côté du canal de dérivation, l'au moins un dispositif à disque de rupture (5) se rompant à une pression de rupture définie et libérant l'écoulement des gaz d'échappement depuis l'au moins un canal d'écoulement principal dans le canal de dérivation (4) en aval de l'au moins un élément de purification des gaz d'échappement (3) à cet endroit.

2. Système de gaz d'échappement selon la revendication 1, **caractérisé**
**en ce que** dans le canal de dérivation (4) en aval du dispositif à disque de rupture (5) est disposé au moins un élément de purification des gaz d'échappement supplémentaire (3).

3. Système de gaz d'échappement selon la revendication 1 ou 2,
**caractérisé en ce que** le canal de dérivation (4) et au moins un canal d'écoulement principal (10) présentant l'au moins un élément de purification des gaz d'échappement (3) débouchent en aval de l'au moins un élément de purification des gaz d'échappement (3) dans une région commune du boîtier, en particulier débouchent dans une région commune du boîtier (11) conduisant à une évacuation (28) des gaz d'échappement hors du boîtier (25).

4. Système de gaz d'échappement selon l'une quelconque des revendications précédentes, **caractérisé en ce que** la région de paroi présentant l'au moins un dispositif à disque de rupture (5) est orientée au moins dans la région du dispositif à disque de rupture (5) sous forme angulaire par rapport à la direction d'écoulement, en particulier peut être inclinée suivant un certain angle par rapport à l'au moins un élément de purification des gaz d'échappement (3) situé en amont.

5. Système de gaz d'échappement selon l'une quelconque des revendications précédentes, **caractérisé en ce que** le dispositif à disque de rupture (5) est formé par au moins un disque de rupture, en particulier le dispositif à disque de rupture (5) est formé par au moins deux disques de rupture disposés l'un derrière l'autre dans la direction d'écoulement (9), en particulier s'appliquant dans une connexion en appui à plat.

6. Système de gaz d'échappement selon l'une quelconque des revendications précédentes, **caractérisé en ce qu'**un auxiliaire de rupture pouvant être commandé et activé au moyen d'un dispositif de commande (12) en fonction d'au moins un paramètre prédéfini spécifique, en particulier en fonction d'une obtention ou d'un dépassement d'une valeur seuil prédéfinie de manière spécifique, est associé au dispositif à disque de rupture (5) et il est de préférence prévu que l'auxiliaire de rupture soit formé par au moins un élément chauffant (13) et/ou par au moins un élément explosif (20) et/ou par un fluide de travail gazeux ou liquide, au moyen duquel ou au moyen desquels l'au moins un disque de rupture du dispositif à disque de rupture (5) peut être affaibli et/ou détruit pour libérer l'écoulement de gaz d'échappement à travers le et/ou vers le canal de dérivation (4).

7. Système de gaz d'échappement selon la revendication 6, **caractérisé**
**en ce qu'**au moins un capteur (10, 11) est disposé en amont et/ou en aval de l'au moins un élément de purification des gaz d'échappement (3), au moyen duquel l'au moins un paramètre peut être détecté, en fonction duquel l'auxiliaire de rupture peut être commandé et activé.

8. Système de gaz d'échappement selon la revendication 6 ou 7,
**caractérisé en ce que** l'auxiliaire de rupture est formé par au moins un élément chauffant électrique (13), qui est disposé au niveau d'un point défini du disque de rupture (5), en particulier centralement et/ou au milieu, et qui, dans l'état activé, chauffe la région de paroi du disque de rupture associée, en particulier qui la détruit thermiquement.

9. Système de gaz d'échappement selon l'une quelconque des revendications 6 à 8, **caractérisé en ce que** l'auxiliaire de rupture est formé par au moins un élément explosif (20) qui est disposé au niveau d'un point défini du disque de rupture (5), en particulier centralement et/au milieu et qui, dans l'état activé, détruit par allumage d'une charge explosive, la région de paroi du disque de rupture associée.

10. Système de gaz d'échappement selon l'une quelconque des revendications 6 à 9, **caractérisé en ce que** le disque de rupture (5) est réalisé au moins en partie avec une double paroi et présente un espace libre (21) situé entre des régions de paroi opposées, l'espace libre (21) pouvant être alimenté avec un milieu de travail gazeux ou liquide au moyen d'un dispositif d'alimentation (22) de telle sorte qu'une pression de rupture agissant depuis l'espace libre (21) et par conséquent depuis l'intérieur sur les parois du disque de rupture puisse être établie.

11. Système de gaz d'échappement selon l'une quelconque des revendications 6 à 10, **caractérisé en ce qu'**un dispositif d'alimentation en air sous pression (26) en tant qu'auxiliaire de rupture est associé au disque de rupture (5), en particulier une ouverture d'embouchure du dispositif d'alimentation en air comprimé (26) est orientée sensiblement centralement sur le disque de rupture (5), au moyen de laquelle une impulsion d'air sous pression et/ou un choc d'air sous pression peut être appliqué(e) de manière commandée, de préférence par intervalles ou sous forme d'impulsions, sur une région définie du disque de rupture (5).

12. Système de gaz d'échappement selon l'une quelconque des revendications 6 à 11, **caractérisé en ce que**
dans la ligne d'échappement du moteur à combustion interne est disposé au moins un dispositif de détection de la pression d'explosion, en particulier au moins un capteur de pression ou au moins un microphone, au moyen duquel une explosion peut être détectée,
**en ce que** le dispositif de détection de la pression d'explosion est accouplé à un dispositif de commande au moyen duquel, lors de la détection d'une explosion, un auxiliaire de rupture peut être commandé de telle sorte qu'au moyen de l'auxiliaire de rupture, l'au moins un dispositif à disque de rupture (5) puisse être détruit avant que l'onde de pression n'atteigne le dispositif à disque de rupture (5).

13. Véhicule, en particulier véhicule utilitaire, ou bateau, en particulier navire, comprenant un moteur à combustion interne avec un système de gaz d'échappement (1) selon l'une quelconque des revendications précédentes.
